# FASCICULE DE BREVET EUROPEEN

(11) **EP 1 290 578 B1**
(45) Date de publication et mention de la délivrance du brevet: **02.01.2008**
(21) Numéro de dépôt: 00936937.2
(22) Date de dépôt: 23.05.2000
(51) Int. Cl.: G06F 17/30

(54) **PROCEDE DE RECHERCHE DE DONNEES AUTOMATISE ET SECURISE AU MOYEN D'UN RESEAU DE TRANSMISSION DE DONNEES**
VERFAHREN ZUM AUTOMATISCHEN UND GESICHERTEN SUCHEN VON DATEN MIT HILFE EINES DATENÜBERTRAGUNGSNETZWERKS
AUTOMATIC AND SECURE DATA SEARCH METHOD USING A DATA TRANSMISSION NETWORK

(43) Date de publication de la demande: 12.03.2003
(73) Titulaire: Vigilint (Software) Holdings Limited, Dublin 8 (IE)
(72) Inventeur: Vinseonneau, Daniel, 06110 Le Cannet (FR)
(74) Mandataire: de Zeeuw, Johan Diederick
(86) Numéro de dépôt international: PCT/FR2000/001407
(87) Numéro de publication internationale: WO 2001/090934

(56) Documents cités:
- EP-A- 0 940 762
- WO-A-00/14651
- US-A- 5 913 214
- BALDAZO R: "NAVIGATING WITH A WEB COMPASS" BYTE,US,MCGRAW-HILL INC. ST PETERBOROUGH, vol. 21, no. 3, 1 mars 1996 (1996-03-01), pages 97-98, XP000600179 ISSN: 0360-5280
- BAYARDO JR R J ET AL: "INFOSLEUTH: AGENT-BASED SEMANTIC INTEGRATION OF INFORMATION IN OPEN AND DYNAMIC ENVIRONMENTS" SIGMOD RECORD,US,ASSOCIATION FOR COMPUTING MACHINERY, NEW YORK, vol. 26, no. 2, 1 juin 1997 (1997-06-01), pages 195-206, XP000730507

## Description

### Domaine technique :

La présente invention concerne les procédés et systèmes de recherche documentaires dans lesquels un utilisateur a accès au moyen d'un serveur local d'un réseau de transmission de données, à des banques de données accessibles grâce à des serveurs du réseau, les données répondant à des critères définis par l'utilisateur étant ensuite téléchargées pour être emmagasinées dans une base de données associée au serveur local.

### Etat de l'art :

Il existe un grand nombre de banques de données offrant accès à des informations les plus diverses comme les brevets, les cours de la bourse, les réservations aériennes, ...etc. Ces banques de données sont généralement accessibles via Internet ou par connexion directe via le réseau téléphonique. Il est possible alors d'interroger une banque de données soit en entrant les requêtes au clavier soit en utilisant un fichier contenant au moins une requête appelé script de requête automatique. Les données résultantes sont soit visualisées de manière interactive, soit imprimées, soit sauvegardées dans un fichier pour une consultation ultérieure.

Dans l'article « Navigating with a Web Compass », by Rex Paul BALDAZO (Byte, US, Mcgraw-Hill Inc. St Peterborough, Vol. 21, N° 3, 1 mars 1996, pages 97-98, XP00600179, ISSN : 0360-5280), un logiciel est divulgué. Ce logiciel est commercialisé sous le nom « Web Compass ». Cet outil « Web Compass » est adapté pour travailler en interaction avec plusieurs systèmes de recherche. Cela signifie que le logiciel « Web Compass » ne procède pas aux recherches par lui-même mais utilise les systèmes existants tels que LYCOS et YAHOO. Avec le système « Web Compass »,
l'utilisateur indique, par exemple, des mots-clés et indique également quelles banques de données doivent être utilisées pour retrouver les informations recherchées. Après la réception des résultats, le logiciel « Web Compass » peut être utilisé pour organiser l'information retrouvée. Un des outils du logiciel « Web Compass » permet de réorganiser l'information retrouvée et de la localiser dans un serveur local. Le logiciel « Web Compass » peut être installé de telle sorte que de telles recherches puissent être menées, par exemple, de façon journalière et automatique et localiser les nouvelles informations dans un endroit précis du serveur local.

Un type de banques de données très utilisé comprend les bases de données contenant les publications de brevets d'invention qui constituent à l'heure actuelle 80% des informations écrites présentes dans le monde. Les bases de données brevets peuvent être classées en deux familles : les bases de données généralistes qui sont construites à partir d'un fond documentaire dans lequel les informations sont regroupées par famille. Ce type de bases de données permet de limiter le nombre d'articles tout en favorisant la lecture dans une langue particulière. C'est le cas de la base de données ESPACENET de l'Office Européen des Brevets où les informations bibliographiques sont traduites en anglais. Par contre les bases de données nationales sont limitées aux brevets d'un pays donné (France, Allemagne) mais sont plus complètes en ce sens que l'information fournie est par exemple le brevet dans sa totalité. La recherche consiste donc à effectuer une première requête sur une base de données généraliste du type ESPACENET pour sélectionner les numéros de publication, puis d'effectuer une deuxième requête sur une ou plusieurs bases de données nationales pour obtenir des informations plus complètes.

Bien que dans les bases de données brevets, plusieurs téléchargements concernant le même sujet peuvent être regroupés avec suppression des doublons et éventuellement suppression des brevets hors sujet, chaque requête effectuée sur le WEB dans le réseau Internet est indépendante. Les pages HTML obtenues sont également indépendantes. Par conséquent, l'utilisateur ne dispose d'aucune information synthétique.

La manière actuelle d'interroger les banques de données, et en particulier les bases de données ayant trait aux brevets, ne présente donc pas une grande efficacité sur le plan industriel. En effet, les données reçues résultant d'une recherche sur le réseau Internet sont longues à obtenir, difficiles à consulter et à manipuler et sont quelquefois erronées. Ces inconvénients proviennent du fait que chaque requête est une requête manuelle et est restreinte à un seul processus d'interrogation, ce qui oblige à multiplier le nombre de ces requêtes manuelles.

Enfin, un inconvénient majeur des procédés de recherche de données effectuées sur le réseau Internet est le manque de confidentialité. En effet, un serveur d'informations possède un fichier Log qui permet de visualiser le contenu des requêtes en cours. L'adresse IP utilisée est elle aussi connue de ce serveur. Par conséquent, une personne malveillante peut donc, à travers la visualisation d'une requête, connaître le sujet sur lequel travaille celui qui interroge le serveur.

### Exposé de l'invention :

Le but de l'invention est donc de réaliser un procédé automatisé de recherche de données dans des bases de données accessibles par un réseau de transmission de données qui permette d'accéder de manière rapide et efficace à une pluralité de bases de données sans avoir à formuler une multitude de requêtes manuelles.

Un autre but de l'invention est aussi de réaliser un procédé sécurisé de recherche de données dans des bases de données accessibles par un réseau de transmission de données dans lequel la requête d'origine est une requête d'ordre général ne permettant pas d'obtenir des informations précises sur les caractéristiques de la recherche.

Selon un premier objet, l'invention concerne donc un procédé de recherche de données emmagasinées dans au moins une base de données (32, 34) accessible par au moins un serveur externe d'un réseau de transmission de données (14) consistant à adresser une requête (36) pour chaque base de données à partir d'un serveur local (10) associé à au moins une base de données locale (12), ladite requête comprenant de premiers champs contenant de premiers critères relatifs au type d'informations recherchées et au contenu des informations, et/ou aux dates associées aux informations, lesdits premiers champs pouvant être reliés par des opérateurs booléens et à télécharger ensuite les données répondant aux dits premiers critères dudit serveur externe vers ledit serveur local;
ledit procédé étant caractérisé en ce que l'étape de téléchargement comprend les étapes suivantes :
- génération (90) par ledit serveur local de scripts composés d'une série de commandes basées sur lesdits premiers critères et selon lesquels de premiers pointeurs identifiant de seconds champs de données à télécharger sont créés, et
- activation d'automates par des processus se servant des dits scripts et permettant de télécharger (92) les seconds champs de données pointés par lesdits premiers pointeurs ainsi que d'autres champs de données associés par des relations prédéfinies aux dits seconds champs de données pointées, le dit procédé étant caractérisé en ce qu'il comprend en outre, après que les données répondant aux dits premiers critères ont été téléchargées dudit serveur externe vers ledit serveur local, une étape d'analyse syntaxique (94) des données téléchargées, selon des seconds critères spécifiques différents des premiers critères, afin de retrouver ou créer de nouveaux champs de données spécifiques et une étape de création de seconds pointeurs vers ces nouveaux champs de données spécifiques des dites données téléchargées, avant que les dites données téléchargées et les dits seconds pointeurs soient emmagasinés (98) dans ladite base de données locale.

### Description brève des figures :

Les buts, objets et caractéristiques de l'invention apparaîtront plus clairement à la lecture de la description qui suit en référence aux dessins dans lesquels :
- la figure 1 représente schématiquement un réseau de transmission de données auquel est connecté un serveur local et deux serveurs externes disposant de bases de données dans lesquelles l'utilisateur associé au serveur local veut accéder selon le procédé de l'invention,
- la figure 2 est un bloc-diagramme représentant le système d'implémentation du procédé selon l'invention,
- la figure 3 représente un exemple de requête pouvant être utilisé dans le procédé selon l'invention,
- la figure 4 représente un exemple de page de sélection pouvant être utilisé dans le procédé selon l'invention,

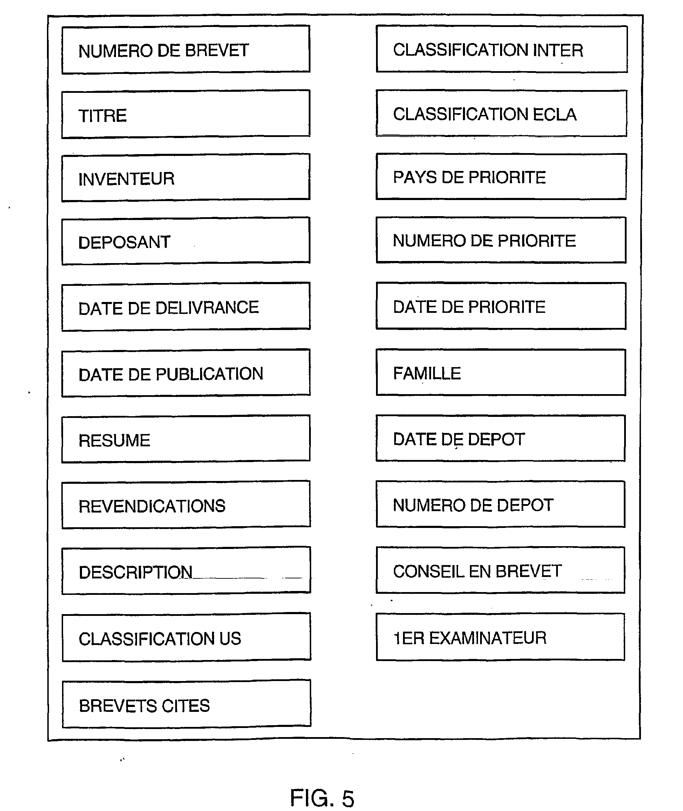

- la figure 5 représente un exemple de page d'interrogation pouvant être utilisé dans le procédé selon l'invention, et
- la figure 6 est un organigramme représentant les différentes étapes mises en oeuvre dans le procédé selon l'invention.

### Description détaillée de l'invention :

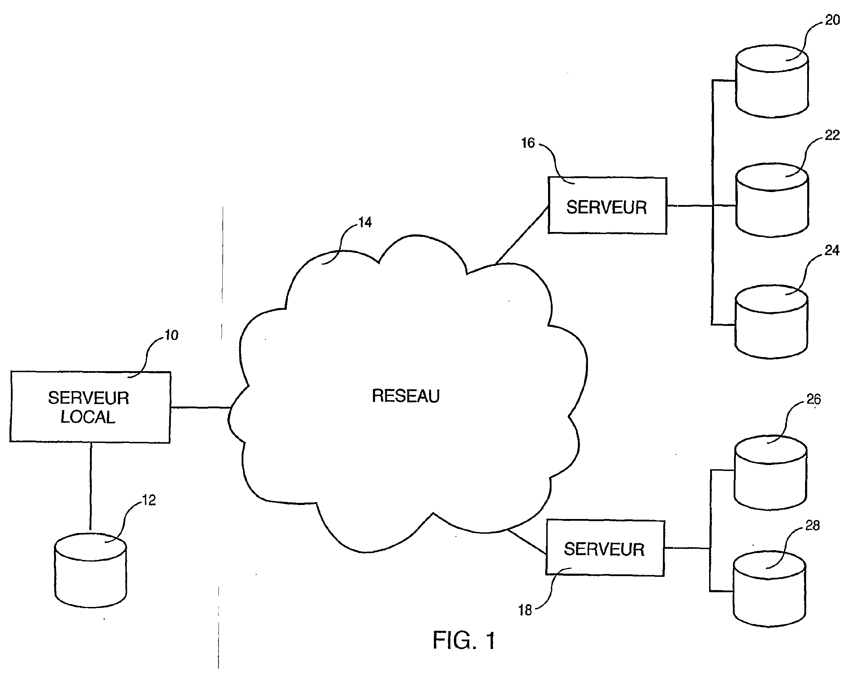

Comme illustré sur la figure 1, le procédé selon l'invention peut être mis en oeuvre dans un serveur local 10 disposant d'une base de données locale 12, lequel serveur local est connecté à un réseau 14 tel qu'un réseau du type IP et en particulier le réseau Internet. Le serveur local 10 permet l'envoi de requêtes de recherche de données vers les serveurs externes 16 et 18 disposant respectivement des bases de données 20, 22, 24 et des bases de données 26, 28. On doit noter que la base de données locale 12 pourrait être remplacée par plusieurs bases de données sans sortir du cadre de l'invention.

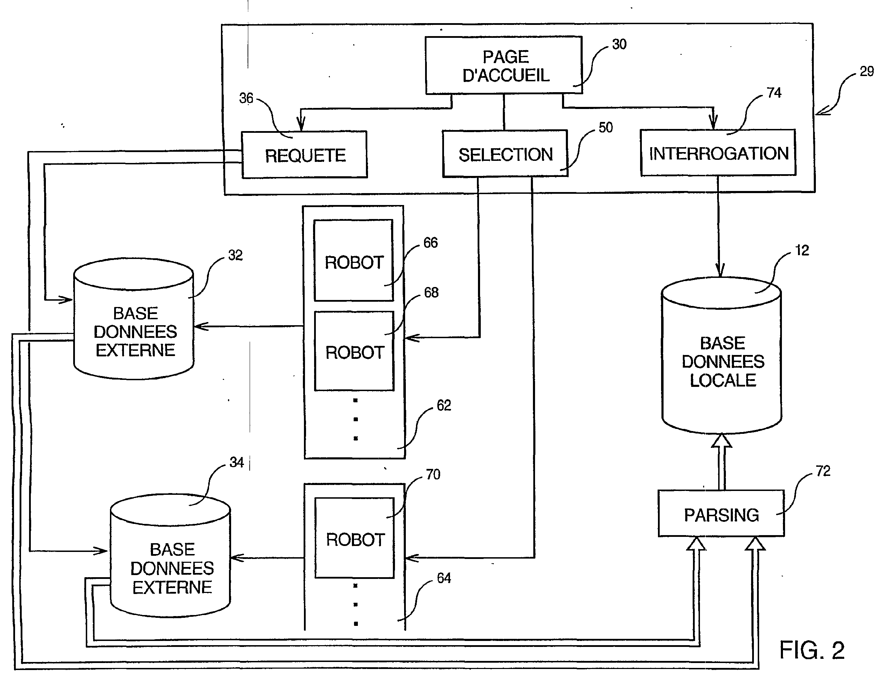

Le bloc-diagramme général de l'invention est illustré sur la figure 2. Dans la suite de la description le procédé de l'invention sera appliqué à la recherche d'informations dans les bases de données brevets. Dans l'interface utilisateur 29 qui est généralement une station de travail, une page d'accueil 30 est affichée sur le dispositif d'affichage du serveur local à l'ouverture du navigateur utilisé. Cette page d'accueil affiche un ou plusieurs formulaires pour accéder respectivement à une ou plusieurs bases de données externes 32, 34, chaque formulaire étant destiné à constituer une requête 36 à la base de données sélectionnée. On doit noter qu'une base de données pourrait également être accessible par plusieurs formulaires.

La requête 36 peut être une simple liste de brevets ou tout autre liste telle que l'ensemble des brevets de tel inventeur ou telle société. Des critères de recherche plus sophistiqués peuvent être utilisés tels que des recherches sur des mots ou du texte en utilisant des opérateurs booléens sur des champs prédéterminés ou non.

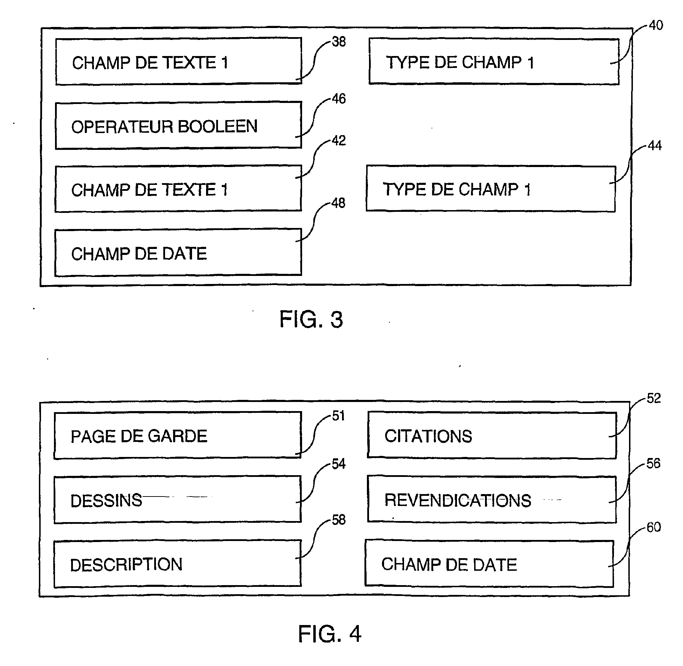

La figure 3 décrit les éléments pouvant être utilisés pour une recherche de type texte sur les serveurs de données externes. En fait, les possibilités de requête sont ajustées en fonction des possibilités de chaque serveur mais conservent certaines caractéristiques communes. Les modèles prédéfinis simplifient ainsi l'interface utilisateur. L'exemple proposé contient un premier couple de champs 38 et 40, respectivement champ de texte en langage naturel et type de champ associé dans lequel on veut effectuer les recherches. Selon les serveurs, des opérateurs booléens peuvent être intégrés au texte. Un second couple 42 et 44 peut aussi optionnellement être utilisé et corrélé avec le premier couple par un opérateur booléen 46. Pour finir un champ de date 48 peut aussi être défini pour limiter les recherches. La liste des champs n'est pas exhaustive. Selon les serveurs, d'autres facilités peuvent être utilisées.

Une fois les champs définis dans la requête, la commande « entrée » ou la sélection d'un bouton spécifique de l'interface utilisateur 29 transmet cette requête vers le serveur associé à la base de données considérée. Etant donné que le serveur peut travailler dans un langage qui n'est pas le langage habituel de l'utilisateur, une conversion dans la langue désirée peut être faite afin de simplifier la génération de la requête qui est alors traduite par le système de génération.

La base de données externe 32 ou 34 renvoie alors des données issues de la recherche qui peuvent être aussi traduites dans la langue de l'utilisateur. En fait, les réponses sont sous forme de liens hypertextes et de pages qui sont accessibles de manière interactive au moyen du navigateur dans le serveur local.

A ce stade, l'utilisateur sélectionne le type de données qu'il veut télécharger dans une page de sélection 50 en HTML qui est affichée, par exemple, dans une zone de la page d'accueil 30 de l'interface utilisateur 29. Cette page de sélection illustrée sur la figure 4 contient généralement les éléments intéressants à télécharger qui sont la page de garde 51, les citations 52, les dessins 54, les revendications 56, et la description 58. Un champ annexe 60 permet de définir à quel moment (heure, date) le téléchargement sera effectué.

L'utilisateur lance ensuite la séquence de téléchargement en cliquant sur la touche correspondante. L'action de téléchargement débute par la génération de scripts qui sont composés d'une série de commandes basées sur les critères de recherche de la requête et qui permettent la création de pointeurs identifiant les champs de données à télécharger. Ces scripts servent à des processus 62, 64 associés respectivement aux bases de données 32 et 34 pour aller chercher les informations dans les bases de données. Chaque processus met en jeu des automates informatiques 66, 68 pour le processus 62 ou 70 pour le processus 64 et dont le nombre dépend du volume ou de la quantité des données recherchées. Ainsi, il est possible qu'un nombre d'automates compris entre 10 et 100 travaillant en parallèle interrogent la même banque de données. Si par exemple, le nombre de réponses à la requête est supérieur à 10.000 alors que le nombre de réponses pouvant être fournies par le serveur est limité à 500, plusieurs automates vont être nécessaires en sélectionnant des fenêtres de dates de publication pour chaque automate par l'ajout des ET logiques. On peut prévoir ainsi des ET logiques portant sur plusieurs champs en combinaison. Ainsi, chaque automate restera dans la limite autorisée et les résultats seront complets et non partiels comme cela aurait été le cas avec un procédé classique et sont fournis à l'utilisateur d'une manière entièrement transparente.

Les automates informatiques effectuent leur travail en tâche de fond en dehors de navigateur du serveur. Ceci est rendu possible du fait que chaque base de données dispose de formats d'affichage connus qui permettent aux automates d'aller retrouver simplement les différentes pages d'un brevet. Cela impose un minimum d'analyse syntaxique des pages afin d'extraire les informations nécessaires pour pouvoir accéder aux pages suivantes. Par exemple la base de données USPTO des brevets us crée des répertoires provisoires pour chaque requête. En plus, les automates déterminent le nombre de pages des brevets et l'emplacement, les numéros des pages dessins en lisant l'information sous-jacente dans une page du brevet. En d'autres termes, les automates effectuent le téléchargement des champs de données pointés par les pointeurs créés dans les scripts mais également le téléchargement d'autres champs de données associés aux champs de données pointés par des relations prédéfinies. Selon une variante, on peut prévoir de ne télécharger que les champs de données qui ne sont pas encore dans la base de données locale afin de minimiser le volume de données à télécharger.

Après la phase de téléchargement, les différentes pages téléchargées sont analysées par une unité d'analyse syntaxique ou « parsing » pour retrouver ou créer des champs tels que le numéro d'un brevet, sa date de publication, le nom des inventeurs... Cette étape peut être effectuée en parallèle à l'étape de téléchargement une fois les données suffisantes disponibles pour traiter au moins un brevet. On peut alors se servir des données fournies par l'analyseur 72 comme données pour l'envoi d'une nouvelle requête. Par exemple, on peut sélectionner des brevets non US cités pour un brevet US dans la base de données USPTO et rechercher ces brevets dans la base ESPACENET. Ou encore, l'analyse des différentes extensions d'un brevet peut conduire à choisir la meilleure source pour un client donné.

Une fois le processus d'analyse syntaxique effectué pour au moins un brevet, on alimente la base de données locale 12 en renseignant les champs pour chaque brevet. On notera que l'objet brevet dans la base de données locale comprend un grand nombre de champs. Il s'agit de la réunion (au sens mathématique du terme) des champs disponibles séparément sur chaque base de données accessible. Par exemple : les brevets US dans la banque de données ESPACENET ne contiennent pas les codes de classement US et ces mêmes brevets sur la Banque de données USPTO ne contiennent pas les extensions ni le code ECLA.

Enfin, la page d'accueil 30 dans l'interface utilisateur 29 comprend également une page d'interrogation 74 pour interroger immédiatement ou non la base de données locale 12.

Cette page affiche une grille de cases à renseigner. Chaque case correspond à un champ des brevets présents dans la banque de données (par exemple classification internationale, US, déposant, ...). Il peut y avoir une case supplémentaire pour rentrer, si on le souhaite, le numéro de téléchargement. Il peut y avoir aussi une dernière case pour entrer directement une requête en langage SQL ou le nom d'un fichier SQL avec des questions préprogrammées (script SQL). On peut appliquer des opérateurs logiques entre les champs. On peut aussi indiquer des paramètres d'affichage et de classement de l'information recherchée (par exemple -tri par société, tri par date de publication...). Ces paramètres permettent d'afficher et/ou regrouper les brevets entre eux dans une ou plusieurs arborescences que l'on peut définir et où l'on se déplace au moyen d'hyperliens.

Une page d'interrogation comprend généralement la liste exhaustive des champs illustrée sur la figurer 5 : le numéro de brevet, le titre, le ou les inventeurs, le déposant, la date de délivrance, la date de publication, le résumé, les revendications, la description, la classification US, les brevets cités, la classification internationale, la classification ECLA, le pays de priorité, le numéro de priorité, la famille, la date de dépôt ainsi que le numéro de dépôt, le conseil en brevet et enfin le nom du premier examinateur. Cette liste n'est qu'un exemple et peut voir de nouveaux éléments s'ajouter.

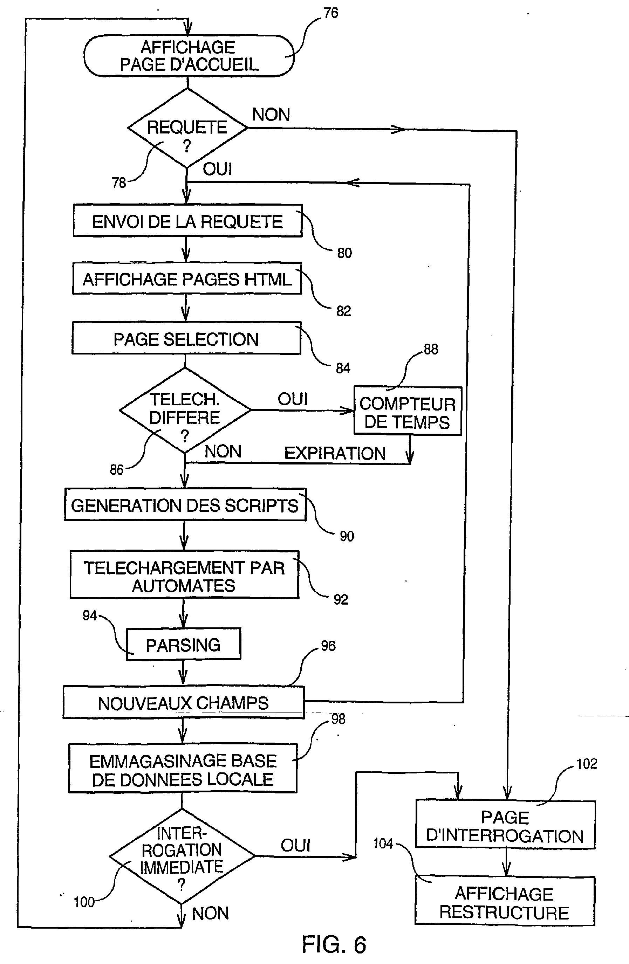

De façon à bien comprendre le procédé selon l'invention, les différentes étapes dudit procédé sont représentées sur la figure 6. Après l'affichage de la page d'accueil (76) dans l'interface utilisateur, l'utilisateur doit déterminer s'il désire faire une requête ou une interrogation à la base de données locale (78). S'il s'agit d'une requête, celle-ci est envoyée par le réseau de transmission vers le serveur externe sélectionné (80). Il y ensuite affichage des pages HTML recherchées (82).

Ensuite, l'utilisateur sélectionne le type d'information qu'il veut télécharger en renseignant la page sélection (84). Comme on l'a vu précédemment, on peut prévoir un champ annexe dans la page sélection pour définir si le téléchargement est différé ou non (86). Ceci correspond à un mode batch qui évite de saturer le réseau et le serveur selon l'importance du téléchargement. Un autre intérêt de ce téléchargement différé est de regrouper tous les téléchargements concernant ce serveur, ce qui masque encore plus l'objectif de la requête. Si le téléchargement doit être différé, un compteur de temps est mis en route (88), et ce n'est qu'à l'expiration d'un temps prédéfini que le procédé est continué.

Après que la décision de télécharger a été prise, l'étape suivante est la génération des scripts (90) suivie du téléchargement proprement dit par les automates informatiques (92). Puis le procédé passe à l'étape d'analyse syntaxique ou parsing (94) qui permet de définir de nouveaux champs de données (96). A noter que ces champs de données peuvent à leur tour être utilisés comme champs de recherche dans une nouvelle requête de la même base de données ou d'une autre base de données.

Puis, les champs de données téléchargées et les pointeurs vers les nouveaux champs de données définis lors de l'étape de parsing sont emmagasinés dans la base de données locale (98). A ce stade, il est possible d'effectuer une interrogation immédiate dans la base de données locale ou non (100). Si ce n'est pas le cas, le processus revient à l'affichage de la page d'accueil (76). Si l'utilisateur désire une interrogation immédiate comme c'est généralement le cas, la page d'interrogation est renseignée (102) et un affichage structuré des champs de données sélectionnés par la page d'interrogation a lieu à l'interface utilisateur (104)

Lorsque les données on été emmagasinées dans la base de données locale (98), elles sont converties en une séquence SQL. Lorsqu'il y a interrogation, les données brutes de la base de données locale sont converties en une page HTML comportant un index et la grille d'interrogation de la page d'interrogation. Cet index est une suite d'hypertliens (numéros et titres des brevets trouvés, etc. voir paramètres d'affichage) vers un processus qui permet d'afficher le contenu d'un brevet. On affiche en plus le script SQL de la requête afin de pouvoir le modifier ou bien l'archiver dans un fichier. A chaque interrogation est associé un numéro, ce qui permet de combiner plusieurs requêtes entre-elles. Ce numéro et les scripts SQL correspondants sont détruits ou conservés à la fin de la session au choix de l'utilisateur. On peut itérer vers le processus d'interrogation de la banque de données locale pour affiner la requête. Il est possible d'exporter le résultat de la requête dans un répertoire afin de permettre par exemple le gravage d'un CD-ROM, la génération d'un site Intranet Impression.

La description qui précède montre que le procédé de l'invention (et le système permettant son implémentation) permet de collecter des données de manière automatique efficace et rapide grâce à l'utilisation d'une pluralité d'automates pouvant travailler simultanément sur la même base de données, plusieurs bases de données du même serveur ou des bases de données de serveurs différents. En outre, le procédé de l'invention est sécurisé du fait que la recherche la plus précise n'est jamais faite sur les serveurs externes, mais sur le serveur local bien que le téléchargement s'effectue sur l'ensemble des données. Il est donc possible de faire une requête d'ordre général avec seulement un mot ou un code de classement et de télécharger tous les brevets répondant à ce critère. Les brevets téléchargés étant ensuite analysés avec un analyseur syntaxique, la base de données locale peut alors être interrogée en toute confidentialité pour obtenir des données précises.

Des modifications peuvent être apportées au procédé qui vient d'être décrit sans sortir du cadre de l'invention. Ainsi, une requête effectuée peut être mise à jour régulièrement par la suite, par exemple tous les mois, afin de prendre en compte automatiquement les mises à jour faites dans les serveurs externes. Il suffit pour cela de définir dans le champ date de la requête (voir figure 3) la fonction mise à jour automatique avec optionnellement la fréquence de mise à jour. Ainsi la base locale sera l'image des bases de données externes en léger différé. Un message est alors généré à l'intention de l'utilisateur pour l'avertir de toute mise à jour.

## Revendications

1. Procédé de recherche de données emmagasinées dans au moins une base de données (32, 34) accessible par au moins un serveur externe d'un réseau de transmission de données (14) consistant à adresser une requête (36) pour chaque base de données à partir d'un serveur local (10) associé à au moins une base de données locale (12), ladite requête comprenant de premiers champs contenant de premiers critères relatifs au type d'informations recherchées et au contenu des informations, et/ou aux dates associées aux informations, lesdits premiers champs pouvant être reliés par des opérateurs booléens et à télécharger ensuite les données répondant aux dits premiers critères dudit serveur externe vers ledit serveur local;
ledit procédé étant **caractérisé en ce que** l'étape de téléchargement comprend les étapes suivantes :
- génération (90) par ledit serveur local de scripts composés d'une série de commandes basées sur lesdits premiers critères et selon lesquels de premiers pointeurs identifiant de seconds champs de données à télécharger sont créés, et
- activation d'automates par des processus se servant des dits scripts et permettant de télécharger (92) les seconds champs de données pointés par lesdits premiers pointeurs ainsi que d'autres champs de données associés par des relations prédéfinies aux dits seconds champs de données pointées, le dit procédé étant **caractérisé en ce qu'**il comprend en outre, après que les données répondant aux dits premiers critères ont été téléchargées dudit serveur externe vers ledit serveur local, une étape d'analyse syntaxique (94) des données téléchargées, selon des seconds critères spécifiques différents des premiers critères, afin de retrouver ou créer de nouveaux champs de données spécifiques et une étape de création de seconds pointeurs vers ces nouveaux champs de données spécifiques des dites données téléchargées, avant que les dites données téléchargées et les dits seconds pointeurs soient emmagasinés (98) dans ladite base de données locale.

2. Procédé selon la revendication 1, dans lequel lesdits champs de données spécifiques créés par ladite étape d'analyse syntaxique (parsing) sont utilisés pour adresser une nouvelle requête pour la même base de données ou une autre base de données.

3. Procédé selon l'une des revendications 1, 2, ou 3, comprenant en outre une étape de sélection dans une page de sélection (50) HTML dans l'interface utilisateur, permettant à l'utilisateur de sélectionner certains desdits seconds champs de données répondant aux dits premiers critères.

4. Procédé selon la revendication 3, dans lequel ladite page de sélection (50) comporte un champ annexe contenant l'heure et/ou la date à laquelle devra être effectuée l'étape de téléchargement différé.

5. Procédé selon l'une des revendications 1 à 4, dans lequel le nombre d'automates activés pour l'étape de téléchargement est fonction du volume des données recherchées de manière à ce que la quantité de données téléchargées par lesdits automates ne soit pas limitée par des paramètres associés à la base données dans laquelle se trouvent lesdites données.

6. Procédé selon la revendication 5 dans lequel chacun desdits automates a pour tâche d'effectuer une analyse syntaxique des pages de données à télécharger de manière à extraire les informations nécessaires à la récupération des données subsidiaires ou sous-jacentes aux données des dites pages de données.

7. Procédé selon l'une des revendications 1 à 5, comprenant en outre une étape d'interrogation au moyen d'une page d'interrogation (74) dans l'interface utilisateur (29), permettant à l'utilisateur d'accéder à des champs de données emmagasinés dans ladite base de données locale (12) .

8. Procédé selon la revendication 7, dans lequel ladite page d'interrogation (74) comporte l'identification des champs de données pouvant être sélectionnés par l'utilisateur de manière à être affichés dans l'interface utilisateur, lesdits champs de données pouvant être reliés par des opérateurs logiques.

9. Procédé selon la revendication 8, dans lequel les informations sélectionnées dans ladite page d'interrogation sont automatiquement converties en langage SQL avant d'être communiquées à ladite base de données locale (12).

10. Procédé selon l'une quelconque des revendications précédentes, dans lequel ladite requête (36) comporte un champ date de manière à être mise à jour régulièrement afin de prendre en compte automatiquement les mises à jour dans lesdites bases de données externes (32, 34).

11. Procédé selon l'une quelconque des revendications précédentes, dans lequel lesdites bases de données externes (32, 34) sont des bases de données brevets.

12. Système de recherche de données dans des bases de données externes comprenant des moyens adaptés pour mettre en oeuvre les étapes du procédé selon l'une des revendications précédentes.

## Claims

1. Method for searching for data stored in at least one database (32, 34) which can be accessed by at least one external server of a data transmission network (14), consisting in addressing a request (36) for each database from a local server (10) associated with at least one local database (12), said request comprising first fields containing first criteria relating to the type of information searched for and to the content of the information and/or to the dates associated with the information, whereby said first fields can be linked by Boolean operators, and in then downloading the data which meet said first criteria from said external server to said local server;
said method being **characterized in that** the downloading step comprises the following steps:
- generation (90) by said local server of scripts composed of a series of commands based on said first criteria and according to which first markers identifying second data fields to be downloaded are created, and
- activation of automata by processes using said scripts and enabling the downloading (92) of the second data fields marked by said first markers and other data fields associated by predefined relations with said second marked data fields, said method being **characterized in that** it furthermore comprises, after the data which meet said first criteria have been downloaded from said external server to said local server, a step entailing syntactic analysis (94) of the downloaded data according to specific second criteria which differ from the first criteria in order to find or create new specific data fields, and a step entailing the creation of second markers for these new specific data fields of said downloaded data before said downloaded data and said second markers are stored (98) in said local database.

2. Method according to Claim 1, in which said specific data fields created by said syntactic analysis step (parsing) are used to address a new request for the same database or a different database.

3. Method according to one of Claims 1, 2 or 3, furthermore comprising a step entailing selection from an HTML selection page (50) in the user interface, enabling the user to select certain of said second data fields which meet said first criteria.

4. Method according to Claim 3, in which said selection page (50) comprises an ancillary field containing the time and/or the date when the deferred downloading step is to be carried out.

5. Method according to one of Claims 1 to 4, in which the number of automata activated for the downloading step is dependent on the volume of the data searched for in such a way that the quantity of data downloaded by said automata is not limited by parameters associated with the database in which said data are located.

6. Method according to Claim 5, in which each of said automata has the task of carrying out a syntactic analysis on the data pages to be downloaded in such a way as to extract the information required in order to recover the data subsidiary or subordinate to the data of said data pages.

7. Method according to one of Claims 1 to 5, furthermore comprising an interrogation step by means of an interrogation page (74) in the user interface (29), enabling the user to access stored data fields in said local database (12).

8. Method according to Claim 7, in which said interrogation page (74) comprises the identification of the data fields which can be selected by the user in such a way as to be displayed in the user interface, whereby said data fields can be linked by logical operators.

9. Method according to Claim 8, in which the information selected from said interrogation page is automatically converted into SQL language before being forwarded to said local database (12).

10. Method according to any one of the preceding claims, in which said request (36) comprises a date field in such a way as to be regularly updated in order to automatically take account of the updates in said external databases (32, 34).

11. Method according to any one of the preceding claims, in which said external databases (32, 34) are patent databases.

12. System for searching for data in external databases, comprising means suitable for implementing the steps of the method according to any one of the preceding claims.

## Patentansprüche

1. Ein Verfahren zur Suche von Daten, die in mindestens einer Datenbank (32, 34), die durch mindestens einen externen Server eines Datenübertragungsnetzes (14) zugänglich ist, gespeichert sind, das darin besteht, für jede Datenbank eine Abfrage (36) von einem lokalen Server (10), der mit mindestens einer lokalen **Datenbank (12) verbunden ist, zu stellen, wobei die Abfrage** erste Felder umfasst, die erste Kennungen bezüglich der Art von gesuchten Informationen und bezüglich des Inhalts der Informationen und/oder bezüglich der Datumsangaben, die mit den Informationen verbunden sind, enthalten, wobei die ersten Felder durch boolesche Operatoren verknüpft werden können, und anschließend die Daten, die auf die ersten Kennungen von dem externen Server reagieren, auf den lokalen Server herunterzuladen;
wobei das Verfahren **dadurch gekennzeichnet ist, dass** der Schritt des Herunterladens die folgenden Schritte umfasst:
- Erzeugung (90) von Skripten durch den lokalen Server, die aus einer Reihe von Befehlen zusammengesetzt sind, die auf den ersten Kennungen basieren und gemäß denen erste Zeiger, die zweite Felder von herunterzuladenen Daten identifizieren, generiert werden, und
- Aktivierung von Automaten durch Prozesse, die sich der Skripte bedienen und ermöglichen, dass die zweiten Datenfelder, auf die die ersten Zeiger zeigen, sowie andere Datenfelder, die durch vordefinierte Beziehungen mit den zweiten Feldern von Daten, auf die gezeigt wird, verbunden sind, heruntergeladen (92) werden, wobei das Verfahren **dadurch gekennzeichnet ist, dass** es des Weiteren, nachdem die Daten, die auf die ersten Kennungen reagieren, von dem externen Server auf den lokalen Server heruntergeladen wurden, einen Schritt (94) der syntaktischen Analyse der heruntergeladenen Daten gemäß zweiten spezifischen Kennungen, die sich von den ersten Kennungen unterscheiden, um neue spezifische Datenfelder wiederzuerlangen oder zu generieren, und einen Schritt der Generierung von zweiten Zeigern für diese neuen spezifischen Datenfelder der heruntergeladenen Daten, bevor die heruntergeladenen Daten und die zweiten Zeiger in der lokalen Datenbank gespeichert sind, umfasst.

2. Verfahren gemäß Anspruch 1, wobei die spezifischen Datenfelder, die durch den Schritt der syntaktischen Analyse (Parsing) generiert werden, verwendet werden, um eine neue Abfrage für die gleiche Datenbank oder eine andere Datenbank zu stellen.

3. Verfahren gemäß einem der Ansprüche 1, 2 oder 3, das des Weiteren einen Auswahlschritt auf einer HTML-Auswahlseite (50) auf der Benutzeroberfläche umfasst, wobei dem Benutzer ermöglicht wird, gewisse zweite Datenfelder, die auf die ersten Kennungen reagieren, auszuwählen.

4. Verfahren gemäß Anspruch 3, wobei die Auswahlseite (50) ein zugehöriges Feld beinhaltet, das die Uhrzeit und/oder die Datumsangabe enthält, an dem der Schritt des zeitlich versetzten Herunterladens ausgeführt wurde.

5. Verfahren gemäß einem der Ansprüche 1 bis 4, wobei die Anzahl an Automaten, die für den Schritt des Herunterladens aktiviert sind, von dem Volumen der gesuchten Daten abhängt, so dass die Quantität an von den Automaten heruntergeladenen Daten nicht durch Parameter, die mit der Datenbank, auf der sich die Daten befinden, verbunden sind, beschränkt ist.

6. Verfahren gemäß Anspruch 5, wobei jeder der Automaten die Aufgabe hat, eine syntaktische Analyse der Seiten der herunterzuladenen Daten auszuführen, um die notwendigen Informationen für die Wiederbeschaffung der Daten, die zu den Daten der Datenseiten subsidiär sind oder darunter liegen, zu entnehmen.

7. Verfahren gemäß einem der Ansprüche 1 bis 5, das des Weiteren einen Befragungsschritt mittels einer Befragungsseite (74) auf der Benutzeroberfläche (29) umfasst, was dem Benutzer ermöglicht, zu in der lokalen Datenbank (12) gespeicherten Datenfeldern zu gelangen.

8. Verfahren gemäß Anspruch 7, wobei die Befragungsseite (74) die Identifizierung der Datenfelder beinhaltet, die von dem Benutzer ausgewählt werden können, um auf der Benutzeroberfläche angezeigt zu werden, wobei die Datenfelder durch logische Operatoren verknüpft werden können.

9. Verfahren gemäß Anspruch 8, wobei die ausgewählten Informationen auf der Befragungsseite automatisch in SQL-Sprache konvertiert werden, bevor sie auf die lokale Datenbank (12) übertragen werden.

10. Verfahren gemäß einem der vorhergehenden Ansprüche, wobei die Abfrage (36) ein Datenfeld beinhaltet, um regelmäßig aktualisiert zu werden, so dass die Aktualisierungen in den externen Datenbanken (32, 34) automatisch erfasst werden.

11. Verfahren gemäß einem der vorhergehenden Ansprüche, wobei die externen Datenbanken (32, 34) Patentdatenbanken sind.

12. Ein System zur Suche von Daten in den externen Datenbanken, das Mittel umfasst, die angepasst sind, um die Schritte des Verfahrens gemäß einem der vorhergehenden Ansprüche zu implementieren.
